# EUROPÄISCHE PATENTANMELDUNG

(11) **EP 0 801 886 A1**
(43) Veröffentlichungstag der Anmeldung: **22.10.1997**
(21) Anmeldenummer: 96810249.1
(22) Anmeldetag: 19.04.1996
(51) Int. Cl.: A01C 1/08, G01N 21/47

(54) **Bestimmung der Beladung von mit einem farbigen Beizmittel behandeltem Saatgut**

(71) Anmelder: Novartis AG, 4058 Basel (CH)
(72) Erfinder: Leuenberger,Andreas, 4105 Biel-Benken (CH)

(57) **Zusammenfassung**

Zur Bestimmung der Beladung von mit einem farbigen Beizmittel behandeltem Saatgut wird mittels eines Kolorimeters die Farbe des behandelten Saatguts bestimmt und als Mass für die Beladung ausgewertet wird. Speziell wird dabei so vorgegangen, dass die Farben des unbehandelten und des behandelten Saatguts gemessen werden, dass der Farbabstand zwischen den gemessenen Farben des behandelten und des unbehandelten Saatguts gebildet wird und dass dieser Farbabstand als Mass für die Beladung ausgewertet wird. Insbesondere werden die Farben einer grösseren Anzahl von Proben des behandelten Saatguts gemessen und die Streuung der so gewonnenen Messwerte als Mass für die Gleichmässigkeit der Beizmittelbeladung ausgewertet.

Eine Vorrichtung zur Durchführung des Verfahrens umfasst einen Messbehälter zur Aufnahme von Saatgut, ein an den Messbehälter angeschlossenes optoelektrisches Kolorimeter zur Bestimmung der Farbe des im Messbehälter befindlichen Saatguts und einen mit dem Kolorimeter zusammenwirkenden und dieses steuernden Rechner zur Übernahme und Auswertung der vom Kolorimeter erzeugten Messdaten. Vorzugsweise ist der Messbehälter rohrförmig und sind das Kolorimeter und der Rechner zur Durchführung von Farbmessreihen an durch den rohrförmigen Messbehälter bewegtem Saatgut ausgebildet. Insbesondere ist der Rechner dazu ausgebildet, die aus den Farbmessreihen gewonnenen Messwerte auszuwerten und die Auswerteergebnisse in Form von Diagrammen optisch anzuzeigen.

## Beschreibung

Die Erfindung betrifft ein Verfahren zur Bestimmung der Beladung von mit einem farbigen Beizmittel behandeltem Saatgut sowie eine Vorrichtung zur Durchführung des Verfahrens.

Die Behandlung von Saatgut mit Beizmitteln für verschiedene Zwecke ist heute weit verbreitet. Von besonderer Wichtigkeit ist dabei die Beladung des Saatguts mit dem Beizmittel, und zwar sowohl der absolute Wert als auch die Gleichmässigkeit.

Saatgutbeizmittelformulierungen sind üblicherweise farbig bzw. enthalten einen Farbstoff beigemischt. Die Beladung des Saatguts mit dem Beizmittel lässt sich dann anhand der Färbung des Saatguts bestimmen. Nach dem Stand der Technik erfolgt dies heute üblicherweise durch definiertes Auswaschen einer Probe des behandelten Saatguts mittels eines geeigneten Lösungsmittels und durch anschliessende farbmetrische Analyse des dabei anfallenden gefärbten Lösungsmittels. Diese Methode der Bestimmung der Beizmittelbeladung von Saatgut ist relativ umständlich und zeitaufwendig und erfordert spezielle Lösungsmittel.

Durch die Erfindung soll nun die Bestimmung der Beizmittelbeladung von behandeltem Saatgut vereinfacht werden.

Das diesem Anspruch genügende Verfahren ist erfindungsgemäss dadurch gekennzeichnet, dass als Mass für die Beladung die mittels eines Kolorimeters gemessene Farbe des behandelten Saatguts ausgewertet wird.

Gemäss einer besonders vorteilhaften Ausführungsform wird dabei so vorgegangen, dass die Farben des unbehandelten und des behandelten Saatguts gemessen werden, dass der Farbabstand zwischen den gemessenen Farben des behandelten und des unbehandelten Saatguts gebildet wird und dass dieser Farbabstand als Mass für die Beladung ausgewertet wird. Ganz besonders vorteilhaft ist es dabei, wenn die Farben einer grösseren Anzahl von Proben des behandelten Saatguts gemessen werden und die Streuung der so gewonnenen Messwerte als Mass für die Gleichmässigkeit der Beizmittelbeladung ausgewertet wird.

Gemäss dem wesentlichsten Gedanken der Erfindung erfolgt die Bestimmung der Beladung also nicht mehr indirekt über ein Lösungsmittel, sondern direkt durch kolorimetrische Messung am trockenen behandelten Saatgut. Dies ist wesentlich einfacher und rationeller als die konventionelle Vorgehensweise.

Eine für die Durchführung des Verfahrens geeignete Vorrichtung ist gemäss einem weiteren Hauptaspekt der Erfindung gekennzeichnet durch einen Messbehälter zur Aufnahme von Saatgut, ein an den Behälter angeschlossenes optoelektrisches Kolorimeter zur Bestimmung der Farbe des im Messbehälter befindlichen Saatguts und einen mit dem Kolorimeter zusammenwirkenden und dieses steuernden Rechner zur Übernahme und Auswertung der vom Kolorimeter erzeugten Messdaten.

Gemäss einem bevorzugten Ausführungsbeispiel ist der Messbehälter rohrförmig und sind das Kolorimeter und der Rechner zur Durchführung von Farbmessreihen an durch den rohrförmigen Messbehälter bewegtem Saatgut ausgebildet. Vorteilhafterweise ist der Rechner dazu ausgebildet, die aus den Farbmessreihen gewonnenen Messwerte auszuwerten und die Auswerteergebnisse in Form von Diagrammen optisch anzuzeigen.

Weitere Einzelheiten und Vorteile der Erfindung ergeben sich aus der nachstehenden Beschreibung in Verbindung mit der Zeichnung. In dieser zeigen:
- Fig. 1: eine schematische Darstellung eines Ausführungsbeispiels der erfindungsgemässen Vorrichtung zur Bestimmung der Beladung von mit einem farbigen Beizmittel behandeltem Saatgut und
- Fig. 2: ein typisches Beispiel eines in Diagrammform dargestellten Auswerteergebnisses.

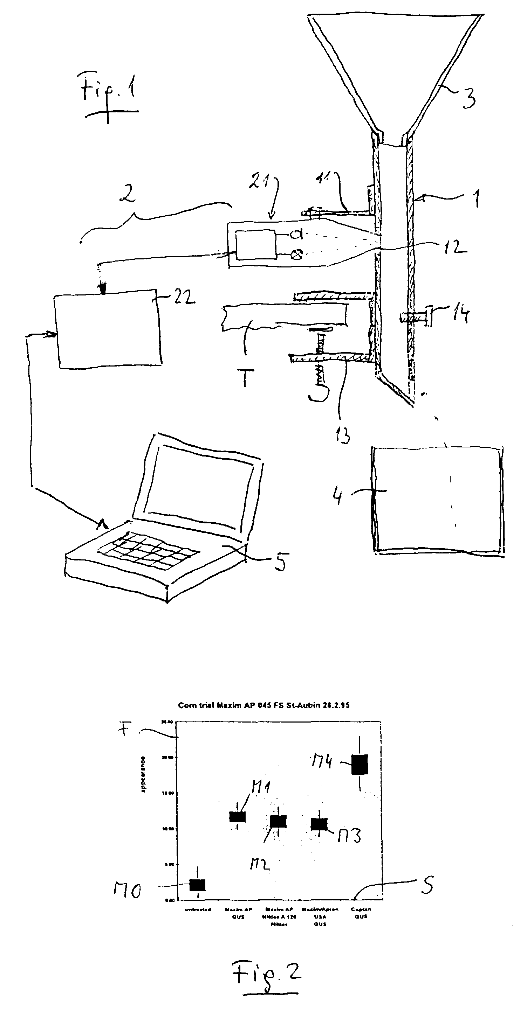

Der Aufbau der erfindungsgemässen Vorrichtung ergibt sich aus Fig. 1. Die Vorrichtung umfasst einen im wesentlichen rohrförmigen Messbehälter 1, an dem der Messkopf 21 eines als Ganzes mit 2 bezeichneten optoelektrischen Kolorimeters (Farbmessgeräts) mittels eines Befestigungsflansches 11 montiert ist. Im Bereich der Spitze des Messkopfs 21 ist ein Fenster 12 im Messbehälter 1 ausgespart. Der rohrförmige Messbehälter 1 ist mittels einer Schraubzwinge 13 vertikal an einem Träger T, beispielsweise einem Tisch, montiert. In das obere offene Ende des Messbehälters 1 ist ein abnehmbarer Einfülltrichter 3 eingesetzt. Unterhalb des an seinem unteren Ende ebenfalls offenen Messbehälters 1 befindet sich im Betrieb eine Auffangschale 4. Im unteren Bereich des Messbehälters 1 ist eine Stellschraube 14 vorgesehen, mittels welcher der Durchflussquerschnitt des Messrohrs reguliert werden kann.

Das Kolorimeter 2 umfasst neben dem Messkopf 21 eine Steuereinheit 22 zur Steuerung des Betriebs und der Messfunktionen des Kolorimeters. Das Kolorimeter 2 ist ein handelsübliches Gerät, beispielsweise etwa vom Typ Chroma Meter CR-331C (Messkopf) und Chromacontrol E (Steuereinheit) der Fima Minolta.

Die Steuereinheit 22 des Kolorimeters 2 ist z.B. über eine serielle Schnittstelle mit einem Rechner 5 verbunden. Dabei kann es sich beispielsweise um einen handelsüblichen tragbaren Personal-Computer, ein sogenanntes LapTop oder NoteBook, handeln. Der Rechner 5 enthält die üblichen Komponenten und ein Programm, welches ihn zur Zusammenarbeit mit dem Kolorimeter 2 befähigt und dabei insbesondere die Übernahme und Auswertung der vom Kolorimeter 2 erfassten Messwerte erlaubt. Die Kommunikation des Rechners 5 mit dem Kolorimeter 2 ist in den Herstellerhandbüchern dokumentiert und bedarf deshalb keiner weiteren Erläuterung.

Zur Durchführung einer Beladungsbestimmung wird zunächst unbehandeltes Saatgut in den Trichter 3 eingefüllt und von diesem durch den Messbehälter 1 durchrieseln gelassen. Die Durchflussgeschwindigkeit wird dabei mittels der Stellschraube 14 auf einen geeigneten Wert eingestellt. An dem durch den Messbehälter 1 hindurchrieselnden Saatgut wird nun eine Messreihe erstellt, indem in kurzen Zeitintervallen jeweils eine Farbmessung durchgeführt wird und die dabei gewonnenen Farbmesswerte in den Rechner 5 übertragen werden. Diese Farbmesswerte sind im folgenden als Referenzwerte bezeichnet. Das Blickfeld (der Messfleck) des Messkopfs 21 des Kolorimeters 2 ist dabei so gross, dass je nach Grösse der Saatgutkörner pro Einzelmessung jeweils etwa 30 Körner gleichzeitig erfasst werden. Die Messwerte stellen also jeweils einen Integralwert über die pro Einzelmessung erfassten Saatgutkörner dar.

In einem zweiten Schritt wird nun eine analoge Messreihe an behandeltem Saatgut erstellt. Die dabei gewonnenen Farbmesswerte werden ebenfalls in den Rechner 5 übertragen und sind im folgenden als Aktualwerte bezeichnet.

In einem dritten Schritt erfolgt nun im Rechner 5 die Auswertung der Referenzwerte und der Aktualwerte mittels des schon genannten Programms. Dabei kann es sich um eines der handelsüblichen Programme für solche Zwecke handeln, welche es gestatten, eine Vielzahl von Messdaten nach z.B. statistischen Kriterien zu verarbeiten und die Ergebnisse in gewünschter Form zahlenmässig oder grafisch darzustellen.

Im vorliegenden Fall ist eine zweidimensionale grafische Darstellung gemäss Fig. 2 sehr zweckmässig. Hierbei ist auf der vertikalen Achse F der aus den Farbmesswerten ermittelte Farbeindruck aufgetragen, während die horizontale Achse S die einzelnen Messreihen angibt. Unter Farbeindruck wird hier der sog. Farbabstand Δe verstanden, d.h. die Länge des Vektors vom Ursprung des gewählten Farbraums bis zum gemessenen Farbort, der üblicherweise durch drei Farbortkoordinaten L,a,b oder L,u,v angegeben wird. Die Blöcke M0 - M4 fassen die Messwerte jeweils einer Messreihe zusammen, wobei M0 für die Referenzwerte und M1 - M4 für die Aktualwerte von vier verschieden beladenen Saatgutchargen stehen. Die vertikale Lage der Blöcke M1 - M4 relativ zum Referenz-Block M0 ist ein Mass für den Absolutwert der Beladung, die vertikale Ausdehnung der Blöcke ist ein Mass für die Messwertstreuung und damit für die Gleichmässigkeit der Beladung des Saatguts. Selbstverständlich lassen sich die Messwerte auch anders auswerten und anzeigen.

Wenn anstelle eines herkömmlichen Kolorimeters ein hochauflösendes Gerät z.B. auf Videokamerabasis eingesetzt wird, so können damit auch einzelne Saatgutkörner gemessen und die Messwerte nach den Prinzipien der digitalen Bildverarbeitung ausgewertet werden. Der Aufwand dafür ist allerdings wesentlich höher.

## Patentansprüche

1. Verfahren zur Bestimmung der Beladung von mit einem farbigen Beizmittel behandeltem Saatgut, dadurch gekennzeichnet, dass als Mass für die Beladung die mittels eines Kolorimeters gemessene Farbe des behandelten Saatguts ausgewertet wird.

2. Verfahren nach Anspruch 1, dadurch gekennzeichnet, dass die Farben des unbehandelten und des behandelten Saatguts gemessen werden, dass der Farbabstand zwischen den gemessenen Farben des behandelten und des unbehandelten Saatguts gebildet wird und dass dieser Farbabstand als Mass für die Beladung ausgewertet wird.

3. Verfahren nach Anspruch 1 oder 2, dadurch gekennzeichnet, dass die Farben einer grösseren Anzahl von Proben des behandelten Saatguts gemessen werden und dass die Streuung der so gewonnenen Messwerte als Mass für die Gleichmässigkeit der Beizmittelbeladung ausgewertet wird.

4. Vorrichtung zur Durchführung des Verfahrens nach einem der vorangehenden Ansprüche, gekennzeichnet durch einen Messbehälter zur Aufnahme von Saatgut, ein an den Messbehälter angeschlossenes optoelektrisches Kolorimeter zur Bestimmung der Farbe des im Messbehälter befindlichen Saatguts und einen mit dem Kolorimeter zusammenwirkenden und dieses steuernden Rechner zur Übernahme und Auswertung der vom Kolorimeter erzeugten Messdaten.

5. Vorrichtung nach Anspruch 4, dadurch gekennzeichnet, dass der Messbehälter rohrförmig ist und dass das Kolorimeter und der Rechner zur Durchführung von Farbmessreihen an durch den rohrförmigen Messbehälter bewegtem Saatgut ausgebildet sind.

6. Vorrichtung nach Anspruch 5, dadurch gekennzeichnet, dass der Rechner dazu ausgebildet ist, die aus den Farbmessreihen gewonnenen Messwerte auszuwerten und die Auswerteergebnisse in Form von Diagrammen optisch anzuzeigen.
